(19)

Europäisches
Patentamt
European
Patent Office
Office européen
des brevets

(11)  **EP 3 772 014 A1**

(12)  **EUROPEAN PATENT APPLICATION**

(43) Date of publication:
03.02.2021  Bulletin 2021/05

(21) Application number: 19188912.0

(22) Date of filing: 29.07.2019

(51) Int Cl.:
**G06K 9/00** *(2006.01)*    **G06K 9/62** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TripEye Limited**
**London**
**SE26 5BN (GB)**

(72) Inventor: **Thompson, Tamlyn**
**London, SE26 5BN (GB)**

(74) Representative: **Armstrong, Rosemary**
**Armstrong IPR Limited**
**Innovation Centre**
**NI Science Park**
**Queens Road**
**Belfast, BT3 9DT (GB)**

(54)  **IDENTITY DOCUMENT VALIDATION METHOD, SYSTEM AND COMPUTER PROGRAM**

(57)    A method of validating an identity document from a plurality of features extracted therefrom, wherein the features comprise a facial image and one or more personal detail elements of the identity document holder; and an identifier of an issuing authority who issued the identity document, wherein the method comprises the steps of

allowing an operator to define a value of a threshold for assessing the similarity of a pair of facial images;

receiving an image of the identity document;

processing the image of the identity document to extract therefrom the identifier of the issuing authority of the identity document, one or more personal detail elements of the identity document holder and a first facial image comprising a facial image of the identity document holder

transmitting to the issuing authority the first facial image and one or more of the personal detail elements of the identity document holder;

performing a facial image comparison process comprising the steps of

allowing the issuing authority to retrieve a record of an identity document issued by the issuing authority and to extract from the retrieved record a second facial image comprising a facial image of the identity document holder of the identity document

calculating a measure of the similarity between the first facial image and the second facial image

repeating the steps of the facial image comparison process in the event the measure of the similarity is less than the value of the threshold, until no further records of identity documents issued by the issuing authority are available for retrieval

allowing the issuing authority to extract one or more textual features from the retrieved record in the event the measure of the similarity exceeds the value of the threshold

allowing the issuing authority to compare the textual features extracted from the retrieved record with the personal detail elements extracted from the image of the identity document;

deeming the identity document validated in the event the personal detail elements extracted from the image of the identity document match at least some of the textual features extracted from the retrieved record

characterised in that the step of calculating a measure of the similarity between the first facial image and the second facial image comprises the step of applying a plurality of face recognition algorithms to the first facial image and the second facial image and calculating an accumulated score therefrom representing the degree of matching between the faces of the persons displayed in each facial image.

EP 3 772 014 A1

90

**Preparation Phase** 80

Receive Image of Identity Document — 100

Detect & Extract F(Vis) & Txt — 102, 104

Interrogate biochip & Retrieve F(Chp) — 106, 108

Retrieve biochip textual features — 109

**Internal Consistency Check** 82

Compare F(Chp) & F(Vis) — 110

114
Manual Match ← N — Score < $T_0$ — 112 — Y

116
Alert ← N — Match ? — Y → Identify issuing authority — 118

**Cross Validation** 84

Transmit F(Vis)/F(Chp) & Txt to Issuing Authority — 120

130
132
Alert ← N — Further Issued ID Records — Y → Retrieve Issued ID Record — 122

Extract F(Off) — 124

N

128
Score < $T_1$ ← Compare F(Vis)/F(Chp) & F(Off) — 126

Y

Extract Textual Features from Issued ID Record — 134

Compare Textual Features with Txt — 136

140
Alert ← N — Match ? — Y → ID Validated — 138

**FIGURE 3**

2

## Description

Field of the Invention

The present invention relates to a method, system and computer program for validating an identity document from a plurality of data extracted from the identity document.

Background of the Invention

The UK Home Office Identity Fraud Steering Committee defines identity fraud as "when a false identity or someone else's identity details are used to support unlawful activity, or when someone avoids obligation/liability by falsely claiming that he/she was the victim of identity fraud" (National Fraud Authority, Fraud Typologies and Victims of Fraud - Literature Review 2009). In December 2012 the National Fraud Authority suggested that identity fraud cost UK adults approximately £3.3 billion each year (National Fraud Authority, Annual Fraud Indicator 2013). However, this does not include any losses suffered by the public, private or charity sectors. Therefore, the full cost to the UK from identity fraud each year is likely to be considerably higher. Similarly, a National Crime Victimization Survey conducted in the US found that individual financial losses due to personal identity theft totalled $24.7 billion, over $10 billion more than the losses attributed to all other property crimes measured in the survey (Victims of Identity Theft 2012).

Identity crimes are one of the fastest growing types of fraud in the UK. The UK's Fraud prevention service found that identity Fraud (using either stolen or fictitious identities) was the most commonly recorded type of fraud in 2014 and accounted for over 41 % of all frauds identified. Increases in the number of pieces of information that a fraudster now needs to be able to gain access to someone else's account (particularly a bank account or credit card account) have made it more difficult for fraudsters to take over existing accounts. As a result, fraudsters are increasingly focussing on using other people's identities to open new accounts. Indeed, the greatest increase in Identity Frauds, in terms of both the number of cases (23,686 cases in 2014 compared with 12,544 in 2013) and as a percentage (+89%), was where a fictitious or stolen identity was used to obtain bank accounts. (CIFAS Fraudscape: UK Fraud Trends Report 2014).

Efficient and effective identity verification techniques are key to reducing this crime. Automated systems for identity verification and matching are known. For example, US Patent No US 8,322,605 describes an identity matching system which enables an operator to determine the status of an individual based on identification information contained on an identification records provided by the individual and environmental information such as threat levels issued by the military or the Department of Homeland Security. Similarly, US7110573 describes an apparatus for automatically identifying and validating identity documents, for validating the identity of the bearer of the document; and verifying that the bearer has authorization to participate in an activity represented by the document. These prior art systems are limited insofar as they perform identity validation based on features contained in presented identity documents only. However, these documents and associated features can be readily altered or forged by fraudsters.

Summary of the Invention

According to a first aspect of the invention there is provided A method of validating an identity document from a plurality of features extracted therefrom, wherein the features comprise a facial image and one or more personal detail elements of the identity document holder; and an identifier of an issuing authority who issued the identity document, wherein the method comprises the steps of

allowing an operator to define a value of a threshold for assessing the similarity of a pair of facial images; receiving an image of the identity document; processing the image of the identity document to extract therefrom the identifier of the issuing authority of the identity document, one or more personal detail elements of the identity document holder and a first facial image comprising a facial image of the identity document holder

transmitting to the issuing authority the first facial image and one or more of the personal detail elements of the identity document holder;

performing a facial image comparison process comprising the steps of

allowing the issuing authority to retrieve a record of an identity document issued by the issuing authority and to extract from the retrieved record a second facial image comprising a facial image of the identity document holder of the identity document

calculating a measure of the similarity between the first facial image and the second facial image

repeating the steps of the facial image comparison process in the event the measure of the similarity is less than the value of the threshold, until no further records of identity documents issued by the issuing authority are available for retrieval

allowing the issuing authority to extract one or more textual features from the retrieved record in the event the measure of the similarity exceeds the value of the threshold

allowing the issuing authority to compare the textual features extracted from the retrieved record with the personal detail elements extracted from the image of the identity document;

deeming the identity document validated in the event the personal detail elements extracted from the image of the identity document match at least some of the textual features extracted from the retrieved record

characterised in that the step of calculating a measure of the similarity between the first facial image and the second facial image comprises the step of applying a plurality of face recognition algorithms to the first facial image and the second facial image and calculating an accumulated score therefrom representing the degree of matching between the faces of the persons displayed in each facial image.

Preferably, the step of allowing an operator to define a value of a threshold for assessing the similarity of a pair of facial images comprises the step of allowing the operator to define the value of the threshold to represent a substantially exact matching between the members of a pair of facial images;

the step of processing the image of the identity document to extract therefrom the identifier of the issuing authority of the identity document, one or more personal detail elements of the identity document holder and a first facial image comprising a facial image of the identity document holder comprises the steps of interrogating a biochip in the identity document; retrieving (108) from the biochip a third facial image comprising a facial image of the identity document holder; and retrieving from the biochip one or more textual features;
the step of transmitting to the issuing authority the first facial image and one or more of the personal detail elements of the identity document holder comprises the step of transmitting to the issuing authority the third facial image and the or each textual feature extracted from the biochip;
the step of calculating a measure of the similarity between the first facial image and the second facial image comprises the step of calculating a measure of the similarity between the third facial image and the second facial image;
the step of allowing the issuing authority to compare the textual features extracted from the retrieved record with the personal detail elements extracted from the image of the identity document comprises the step of allowing the issuing authority to compare the textual features extracted from the retrieved record with the or each textual feature extracted from the biochip; and
the step of deeming the identity document validated in the event the personal detail elements extracted from the image of the identity document match at least some of the textual features extracted from the retrieved record comprises the step of deeming the identity document validated in the event the or each textual feature extracted from the biochip match at least some of the textual features extracted from the retrieved record.

Preferably, the steps of processing the image of the identity document to extract therefrom the identifier of the issuing authority of the identity document, one or more personal detail elements of the identity document holder and a first facial image comprising a facial image of the identity document holder is followed by the steps of

interrogating a biochip in the identity document;
retrieving from the biochip a third facial image comprising a facial image of the identity document holder; and
retrieving from the biochip one or more textual features; and
the step of transmitting to the issuing authority the first facial image and one or more of the personal detail elements of the identity document holder is preceded by the steps of
calculating a measure of the similarity between the first facial image and the third facial image; and
issuing an alert to the operator in the event the measure of similarity is less than the value of the threshold.

Desirably, the step of applying a plurality of face recognition algorithms to the first facial image and the second image and calculating an accumulated score therefrom representing the degree of matching between the faces of the persons displayed in each image comprises the steps of

applying the face recognition algorithms to each of the first facial image and the second facial image to generate a plurality of outputs of the face recognition algorithms;
applying differential weights to the outputs of the face recognition algorithms to create a plurality of weighted outputs of the face recognition algorithms;
normalising the weighted outputs of the face recognition algorithms to create a plurality of normalised weighted outputs; and
calculating the sum of the normalised weighted outputs to generate the accumulated score.

According to a second aspect of the invention there is provided an identity document validation system adapted to validate an identity document from a plurality of features extracted therefrom, wherein the features comprise a facial image and one or more personal detail elements of the identity document holder; wherein the identity document validation system comprises

an identity document processing unit adapted in use to receive a captured image of the identity document and extract therefrom one or more personal detail elements of the identity document holder and a first facial image comprising a facial image of the identity document holder;
a cross validation unit coupled with the identity document processing unit to receive the first facial image and the or each personal detail elements of the identity document holder; and is further couplable in use with a repository of records of identity documents issued by the issuing authority of the identity document; wherein each record comprises one or more facial images of the identity document holder of one such identity document and one or more textual features of that identity document; and wherein the cross validation unit is adapted in use to retrieve records from the repository and communicate each record to a face recognition engine block which is adapted in use to calculate a measure of similarity between the first facial image and the or each facial image in the record and identify therefrom a second facial image that most closely matches the first facial image

and a textual record analyser coupled with the cross validation unit and adapted in use to compare the textual features of the identity document with those of a matching record that comprises the second facial image;

and wherein the identity document validation system is adapted in use to deem the identity document validated in the event the measure of similarity between the first facial image and the second facial image exceeds the value of the threshold and the or each of the textual features of the matching record match the or each of the personal detail elements of the identity document holder

characterised in that the face recognition engine block comprises a plurality of face recognition engines adapted in use to be applied to a pair of facial images and calculate an accumulated score therefrom representing the measure of similarity between the faces of the persons displayed in each image.

Preferably, the identity document processing unit further comprises a

an biochip interrogation unit interface coupled with an internal consistency checking unit, wherein the biochip interrogation unit interface is adapted in use permit the transmission to the internal consistency checking unit, of a third facial image of the identity document holder retrieved from a biochip if present in the identity document, and

wherein the internal consistency checking unit comprises a plurality of face recognition engines, adapted in use to be applied to first facial image and the third facial image and calculate an accumulated score representing the degree of matching between the faces of the persons displayed in each facial image; and wherein the internal consistency checking unit is further coupled with the cross validation unit and is adapted in use to deactivate the cross validation unit in the event the accumulated score is less than the threshold and issue an alert to an operator that the identity document is suspect.

Preferably, the internal consistency checking unit is coupled with an eyeball unit adapted in use to display to an operator the faces of the persons displayed in the first facial image and the third facial image; and to allow the operator to provide a determination as to whether the faces match; wherein the eyeball unit is coupled with the cross validation unit and is adapted in use to deactivate the cross validation unit in the event the operator provides the determination that the faces do not match.

Preferably, the cross validation unit is coupled with the internal consistency checking unit to receive the third facial image and one or more personal detail elements of the identity document holder retrieved from the biochip in the identity document; and wherein the face recognition engine block is adapted in use to calculate a measure of matching between the third facial image and the or each facial image in the record;

wherein the textual record analyser is adapted in use to compare the or each personal detail elements of the identity document holder retrieved from the biochip with those of the record whose facial image which most closely matches that of the third facial image;

wherein the identity document validation system is adapted in use to deem the identity document validated in the event the third facial image and the most closely matching facial image from the repository are substantially exactly matching and the or each of the textual features of the relevant record match the or each of the personal detail elements of the identity document holder retrieved from the biochip; and wherein the accumulated score calculated by the plurality of face recognition engines $E_1$, $E_2$... $E_n$ in the face recognition engine block FRB_1, represents the measure of matching between the faces of the persons displayed in each image.

Preferably, the face recognition blocks each comprise a plurality of face recognition engines adapted in use to be applied to each image in the pairs into which the first facial image, second facial image and third facial image are organised; and a plurality of weighting units coupled to the face recognition engines to apply differential weights to the outputs therefrom; wherein the weighting units are coupled with a summing unit to adapted in use to normalise the weighted outputs from the face recognition engines and to calculate a sum thereof to generate the accumulated score.

Description and Drawings

An embodiment of the invention is herein described by way of example only with reference to the accompanying drawings in which:

Figure 1 is a block diagram of the identity document cross-validation system in accordance with the second aspect of the invention

Figure 2 is a block diagram of a face recognition block employed in the identity document cross-validation system of Figure 1; and

Figure 3 is a flow chart of the identity document cross-validation method in accordance with the first aspect of the invention.

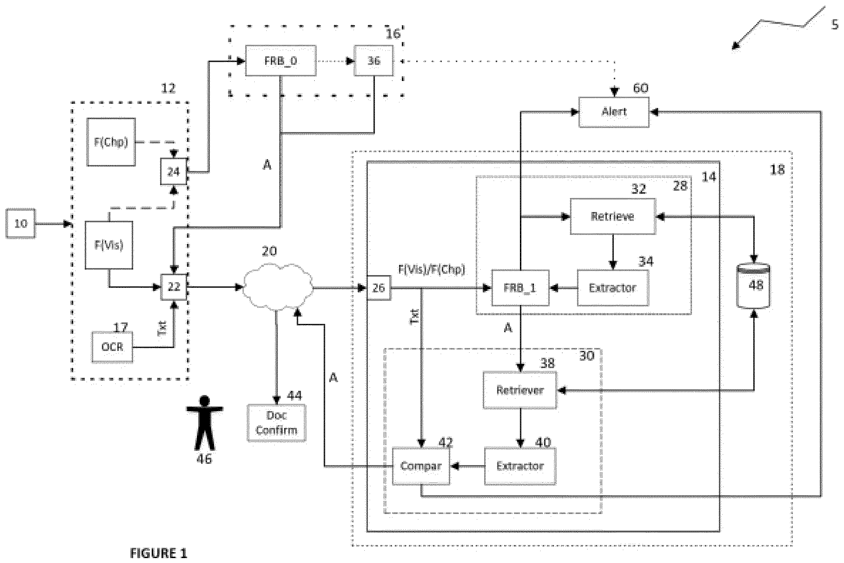

Referring to Figure 1, while certain specific features are illustrated, those skilled in the art will appreciate from the present disclosure that various other features have not been illustrated for the sake of brevity and so as not to obscure more pertinent aspects of the implementations disclosed herein.

For the sake of clarity, the term "identity" will be used henceforth to mean a collection of attributes that uniquely define a person (the fact of being what a person is). Similarly, the term "identity document" will be used henceforth to mean documentation provided by a person to support their claim to a specified identity. More specifically, the term identity document refers to documentation issued by a national or federal authority (e.g. security forces, intelligence agencies, border control etc) which certifies the identity of the person to whom the identity document is issued. The skilled person will understand that the preferred embodiment is not limited to the above-mentioned issuing bodies. In particular, the preferred embodiment is operable with documentation issued by any national or federal body, wherein the documentation serves the purpose of certifying the identity of the person to whom the document is issued.

For brevity, the person to whom an identity document is issued will be referred to henceforth as the "identity document holder". Similarly, the body which issued the identity document will be referred to henceforth as the "issuing authority" of the identity document. For the avoidance of doubt, an identity document will be understood to comprise a pictorial representation (i.e. a photo or digital image) of the face of the identity document holder, to support facial recognition of that person. To this end, the term "face" will be used henceforth to refer to a human face. For brevity, the pictorial representation of the face of the identity document holder contained in the identity document will be referred to henceforth as the "ID facial photo".

In addition, an identity document typically comprises a number of visible features which may be used to assess the authenticity of the identity document. These features may include without limitation the, name/surname of the identity document holder, a date of birth of the identity document holder, a signature of the identity document holder, an issue date of the identity document, an expiry date of the identity document, details of the issuing authority, a stamp of the issuing authority, an identity document reference number; and security features such as security patterns, specialist printing fonts etc. For brevity, the term "personal detail element" will be used henceforth to refer to a piece of information (e.g. date of birth) which when combined with other personal data elements may be used to identify or prove the identity of a person.

For completeness, the term identity document will also be understood to embrace e-IDs. An "e-ID" is a machine-readable identity document containing a contactless integrated circuit (IC) chip within which is stored data from the identity document, a biometric measure of the identity document holder and a security object to protect the data. For the sake of brevity, the contactless integrated circuit (IC) chip in an e-ID will be referred to henceforth as a "biochip".

For security, audit and administrative reasons (amongst others), issuing authorities retain records of the identity documents they issue. For brevity, the records of the identity documents issued by a given issuing authority will be referred to henceforth for as "Issued ID Records". The Issued ID Records include details of the identity documents (e.g. issue date, expiry date, identity document reference number etc.) issued by the relevant issuing authority, together with personal detail elements of the identity document holders of those identity documents. The personal detail elements contained in an Issued ID Record comprise at least one facial photo of the relevant identity document holder. The facial photo in an Issued ID Record may be a copy of the ID facial photo contained in the relevant identity document. Alternatively (or additionally) the facial photo in an Issued ID Record may be a facial photo of the identity document holder captured by the issuing authority 10 at the time the identity document holder was applying for the identity document. For brevity, the facial photo contained within an Issued ID Record will be referred to henceforth as the "Office Face Image F(Off)". The personal detail elements contained in an Issued ID Record may further comprise textual features which include textual components of the visible features of the identity documents (or those contained in the biochip in the event the identity document is an e-ID).

*Identity Document Cross-Validation System*

The identity document cross-validation system 5 may comprise an identity document processing unit 12, a cross-validation unit 14 and optionally an internal consistency checking unit 16. The cross validation unit 14 may be remotely disposed from the identity document processing unit 12 and the optional internal consistency checking unit 16. More specifically, the cross validation unit 14 may deployed within an issuing authority's infrastructure 18 and is operably coupled to the identity document processing unit 12 through the internet 20 or other public or private telecommunications or computer network infrastructure. To this end, the identity document processing unit 12 may comprise a first output interface 22 which is operably coupled to the cross-validation unit 14. The identity document processing unit 12 may optionally comprise a further output interface 24 which is operably coupled with the optional internal consistency checking unit 16.

The identity document processing unit 12 may comprise an interface (not shown) to an image capture device (not shown) adapted to capture of a graphical representation (henceforth known as an "image") of an identity document 10 presented by a candidate client (not shown). The image capture device may comprise a digital camera, a scanner, a webcam or a camera contained in the candidate client's mobile telephone or computing device. The skilled person will understand that the preferred embodiment is not limited to these above-mentioned image capture devices. Instead, the preferred embodiment is operable with any device capable of capturing an image of the presented identity document 10. The interface (not shown) is adapted to operably couple the image capture device (not shown) to the identity document processing unit 12, to enable the identity document processing unit 12 to receive the image captured by the image capture device. In use, the identity document processing unit 12 is adapted to detect in the image, an ID facial photo of the identity document holder. The identity document processing unit 12 is further adapted to crop and extract an image of the ID facial photo from the captured image of the identity document. For brevity, the image of the ID facial photo extracted from the captured image of the identity document will be referred to henceforth as the "Visible Face Image F(Vis)". The identity document processing unit 12 is adapted to transmit the Visible Face Image F(Vis) to the first output interface 22 and optionally to the further optional output interface 24.

The identity document processing unit 12 may also comprise an interface (not shown) to a biochip interrogation unit (not shown). The biochip interrogation unit (not shown) may form a component of the candidate client's mobile telephone or computing device; or it may be a standalone biochip reading device. In use, the biochip interrogation unit (not shown) is adapted to interrogate a biochip if present in the presented identity document 10 (i.e. if the presented identity document 10 is an e-ID) and retrieve from the biochip, the data contained therein. The data retrieved from the biochip (if present) may include a photograph of the identity document holder and personal detail elements of the identity document holder. For brevity, this photograph will be referred to henceforth as the "Chip Face Image F(Chp)" and the personal detail elements contained in the biochip will be referred to as "biochip textual features". The interface to the biochip interrogation unit (not shown) is adapted to operably couple the identity document processing unit 12 to the biochip interrogation unit, to enable the identity document processing unit 12 to receive the data (including the Chip Face Image F(Chp)) retrieved from the biochip, if present in the identity document 10. The identity document processing unit 12 is optionally adapted to transmit the Chip Face Image F(Chp) to the optional further output interface 24.

The identity document processing unit 12 may further comprise an optical character recognition (OCR) unit 17 adapted to perform optical character recognition on the visible features of the presented identity document 10 and extract textual data therefrom. For brevity, the textual data extracted from the presented identity document 10 will be referred to henceforth as "ID Document Text (Txt)". The optical character recognition unit 17 is adapted in use to transmit the ID Document Text (Txt) to the output interface 22.

The cross-validation unit 14 comprises a receiver unit 26 which is adapted in use to receive the Visible Face Image F(Vis) and the ID Document Text (Txt) from the output interface 20 of the identity document processing unit 12. The cross-validation unit 14 further comprises a face record analyser unit 28 and a textual record analyser 30. The face record analyser unit 28 comprises a face record retriever 32, a face extractor 34 and a face recognition engine block FRB_1. The face record retriever 32 is operably coupled with a repository of Issued ID Records issued by the issuing authority wherein the repository may be deployed within the issuing authority's infrastructure 18. For brevity, the repository will be referred to henceforth as the Issued ID Records Store 48. The face record retriever 32 is further operably coupled with the face extractor 34. More specifically, the face record retriever 32 is adapted in use to interrogate the Issued ID Records Store 48 and to retrieve therefrom individual Issued ID Records. The face extractor 34 is operably coupled with the face record retriever 32 and the face recognition engine block FRB_1. The face extractor 34 is adapted in use to receive an Issued ID Record from the face record retriever 32; extract from the Issued ID Record the Office Face Image F(Off) and a record number to identify the Issued ID Record; and transmit the extracted Office Face Image F(Off) and record number to the face recognition engine block FRB_1. The face recognition engine block FRB_1 is also adapted to receive the Visible Face Image F(Vis) from the receiver unit 26. Thus, the face recognition engine block FRB_1 is adapted to receive two facial images, namely an Office Face Image F(Off) and a Visible Face Image F(Vis). In a similar manner, the internal consistency checking unit 16 comprises a face recognition engine block FRB_0 which is adapted in use to receive the Visible Face Image F(Vis) and the Chip Face Image F(Chp) from the optional further output interface 24 of the identity document processing unit 12.

It will be understood by the person skilled in the art that the face recognition blocks FRB_0 and FRB_1 may alternatively be configured to receive a compressed representation of the Visible Face Image F(Vis) and the Chip Face Image F(Chp). This configuration will reduce communication delays incurred in transmitting the large quantities of data typically contained in facial images. However, any such reduction in transmission delays will be at least partially offset by the increased computational load involved in compressing and decompressing the facial images before and after transmission to the relevant face recognition blocks FRB_0 and FRB_1.

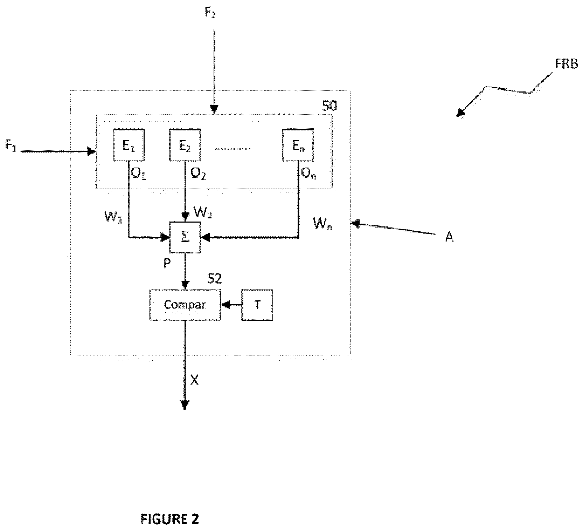

Referring to Figure 2, a face recognition engine block FRB is adapted to receive two face images F1 and F2; and an activation signal A. For example, in the case of the face recognition engine block FRB_0 in the internal consistency checking unit 16 of Figure 1, the two face images (F1 and F2) are Visible Face Image F(Vis) and the Chip Face Image F(Chp) respectively. Similarly, in the case of the recognition engine block FRB_1 in the cross-validation unit 14 in Figure 1, the two face images (F1 and F2) are the Visible Face Image F(Vis) and Office Face Image F(Off) respectively. The activation signal A serves to activate the face recognition engine block FRB and will be discussed in more detail later in the description.

The face recognition engine block FRB comprises:

- an engine block 50 which in turn comprises a plurality of face recognition engines $E_1$, $E_2$.... $E_n$ adapted to operate in sequence or in parallel;
- a summing unit $\Sigma$ which is operably coupled with each of the face recognition engines $E_1$, $E_2$.... $E_n$; and
- a comparator 52 which is operably coupled with the summing unit $\Sigma$ and is further provided with a predefined threshold value T.

On receipt of the activation signal A, a face recognition engine block FRB is adapted to be activated and to thereby activate the face recognition engines $E_1$, $E_2$.... $E_n$, the summing unit $\Sigma$ and the comparator 52.

Each face recognition engine $E_i$ (i= 1 to n) is adapted in use to implement a face recognition algorithm to compare the two face images F1 and F2 and produce an output $O_i$ (i=1 to n) indicating the degree to which the faces in the face images match. In a preferred embodiment, the face recognition engines $E_1$, $E_2$.... $E_n$ may comprise third party facial recognition software tools, including without limitation, the Open Source Computer Vision (OpenCV) face recognition tool, ReKognition (trade mark) Face Recognize (trade mark) tool, Verilook (trade mark) SDK, the Lambda labs (trade mark) Face Recognition Application Programming Interface (API) Picasa (trade mark), Face++ (trade mark) face recognition API, and NEC's NeoFace (trade mark) match tool. However, the person skilled in the art will recognize that the preferred embodiment should in no way be construed as being limited to the use of the above-mentioned face recognition tools. Indeed, these face recognition tools are mentioned for example only. The preferred embodiment is operable with any other face recognition engine as required by the user, including face recognition engines yet to be developed. The person skilled in the art will further recognize that the preferred embodiment is not limited to the above-mentioned output metric from the face recognition engines. In particular, the face recognition engines may also produce an output which provides an indication of the degree of confidence of the degree of matching of the two face images F1 and F2.

The summing unit $\Sigma$ is adapted in use to receive and process the accumulated outputs $O_i$ (i =1 to n) of the face recognition engines $E_1$, $E_2$... $E_n$. By accumulating the results of the multiple face recognition engines $E_1$, $E_2$... $E_n$, the preferred embodiment provides more robust identity matching decisions. To this end, the summing unit $\Sigma$ may apply differential weights ($W_i$) to the outputs $O_i$ (i =1 to n) of each face recognition engine $E_1$, $E_2$... $E_n$. For example, the summing unit $\Sigma$ may weight an output according to the confidence (if available) given to the degree of matching between the two face images F1 and F2 provided by a relevant face recognition engine.

The summing unit $\Sigma$ is further adapted in use to normalise the weighted outputs ($\alpha_i W_i O_i$) and calculate the sum of the normalised weighted outputs. For brevity, the sum of the normalised weighted outputs will be referred to henceforth as the summing unit output (P).

$$P = \sum_{i=1}^{n} \alpha_i W_i O_i$$

The summing unit $\Sigma$ is adapted, in use, to transmit the summing unit output (P) to the comparator 52.

The person skilled in the art will understand that the above operations are provided for illustration purposes only; and in no way should be construed as limiting the preferred embodiment to these process operations. In particular, the summing unit $\Sigma$ may implement a variety of other operations on the accumulated outputs $O_i$ (i =1 to n) of the face recognition engines $E_1$, $E_2$... $E_n$ dependent on the specific nature and content of the outputs $O_i$ (i =1 to n) of the face recognition engines $E_1$, $E_2$... $E_n$.

The comparator 52 is adapted in use to receive the summing unit output (P) and to compare it against the pre-defined threshold value T. Based on the results of the comparison, the comparator 52 is adapted in use to produce an output which will also be the overall output from the relevant face recognition block. Thus, the output of the comparator 52 will be referred to henceforth as an FRB output X. Thus, for ease of understanding, the output of the comparator 52 in the face recognition block FRB_0 (in the internal consistency checking unit 16) and face recognition block FRB_1 (in the cross validation unit 14) will be designated as $X_0$ and $X_1$ respectively.

For example, in the event the summing unit output (P) is determined by the comparator 52 to be less than the pre-defined threshold value T, the FRB output X may be zero. Similarly, in the event the summing unit output (P) is determined by the comparator 52 to exceed the pre-defined threshold value T, the FRB output X may be one. The person skilled in the art will understand that the preferred embodiment is in no way limited to these specific FRB values. The above operations are provided for illustrative purposes only. In particular, preferred embodiment is operable with any FRB output value or configuration as required. For example, rather than the above binary output values, the FRB value may be a continuously valued variable reflecting the degree of closeness between the summing unit output (P) and the pre-defined threshold value T.

Returning to Figure 1, the identity document cross-validation system 5 is adapted so that an activation signal A (not shown) is substantially continuously and substantially activated and transmitted to the face recognition block FRB_0 in the internal consistency checking unit 16. Similarly, the face recognition block FRB_0 in the internal consistency checking unit 16 is operably coupled to an eyeball unit 36, so that the face recognition block FRB_0 is adapted in use to transmit its output $X_0$ to the eyeball unit 36. The eyeball unit 24 is adapted in turn to receive the FRB output $X_0$. In the event the output $X_0$ indicates that the Chip Face Image F(Chp) and the Visible Face Image F(Vis) match, the eyeball unit 36 is adapted to transmit an activation signal A to the output interface 22 in the identity document processing unit 12. However, in the event the output $X_0$ indicates that the Chip Face Image F(Chp) and the Visible Face Image F(Vis) do not match within the tolerance established by the pre-defined threshold value T of internal consistency checking unit 16, the eyeball unit 36 is adapted in use to display the faces shown in the Chip Face Image F(Chp) and the Visible Face Image F(Vis) to an operator (not shown); and to allow the operator (not shown) to provide a determination as to whether the faces match. In the event the operator (not shown) overrides the output from the face recognition block FRB_0 and provides the determination that the Chip Face Image F(Chp) and the Visible Face Image F(Vis) match, the eyeball unit 36 is adapted to transmit an activation signal A to the output interface 22 in the identity document processing unit 12. In the event the operator (not shown) agrees with the output from the face recognition block FRB_0 and provides the determination that the Chip Face Image F(Chp) and the Visible Face Image F(Vis) do not match, the eyeball unit 24 is adapted to activate an alert module 60.

In the event

(a) the presented identity document does not comprise a biochip (i.e. the identity document is not an eID);or
(b) the identity document cross-validation system 5 does not comprise a biochip interrogation unit or an internal consistency checking unit 16

the identity document cross-validation system 5 is adapted so that an activation signal A is substantially continuously and substantially activated and transmitted to the output interface 22 in the identity document processing unit 12.

The face recognition block FRB_1 in the cross-validation unit 14 is operably coupled with the face record retriever 32, so that the face recognition block FRB_1 is adapted in use to transmit its output $X_1$ to the face record retriever 32 and to the textual record analyser 30. The face record retriever 32 and the textual record analyser 30 are adapted in turn to receive the FRB output $X_1$.

In the event the output $X_1$ indicates that the Office Face Image F(Off) and the Visible Face Image F(Vis) match, the face recognition block FRB_1 is adapted to transmit an activation signal A to the textual record analyser 30 and the record number of the relevant Issued ID Record. However, in the event the output $X_1$ indicates that the Office Face Image F(Off) and the Visible Face Image F(Vis) do not match within the tolerance established by the pre-defined threshold value T of FRB_1, the face recognition block FRB_1 is adapted to transmit an activation signal A to the face record retriever 32 to cause it to retrieve the next Issued ID Record from the Issued ID Records Store 48. In this way, the face recognition block FRB_1 is cyclically coupled with the face record retriever 32, the Issued ID Records Store 48 and the face extractor 34, to enable the Visible Face Image F(Vis) to be compared with the Office Face Image F(Off) of each Issued ID Record in the Issued ID Records Store 48. In the event, all the Issued ID Records in the Issued ID Records Store 48 have been retrieved and the Office Face Image F(Off) contained therein compared against the Visible Face Image F(Vis) without finding a match, the face recognition block FRB_1 is adapted to activate the alert module 60.

The textual record analyser 30 comprises a record retriever 38, a text extractor module 40 and a text comparator unit 42. The record retriever 38 is operably coupled with the face recognition block FRB_1 in the face record analyser unit 28 to receive the activation signal A therefrom and the index of the Issued ID Record whose Office Face Image F(Off) matches the Visible Face Image F(Vis) of the presented ID document 10. The record retriever 38 is further operably coupled with the Issued ID Records Store 48 and is adapted on receipt of the activation signal A to interrogate the Issued ID Records Store 48 and retrieve therefrom the Issued ID Record with the same record number as that received by the record retriever 38 from the face recognition block FRB_1. The text extractor module 40 is operably coupled with the record retriever 38 to receive the retrieved Issued ID Record. The text extractor module 40 is adapted to process the retrieved Issued ID Record and extract the textual features thereof.

The text comparator unit 42 is operably coupled with the text extractor module 40 to receive therefrom the extracted textual features from the Issued ID Record retrieved from the Issued ID Records Store 48. The text comparator 42 is further operably coupled with the receiver unit 26 to receive the ID Document Text (Txt) therefrom. The text comparator 42 is adapted to compare the extracted textual features from the retrieved Issued ID Record with the ID Document Text (Txt) from the presented ID document 10. In the event a match is found between the ID Document Text (Txt) and at least some of the extracted textual features from the retrieved Issued ID Record, the text comparator 42 is adapted to issue an activation signal A to a document confirmation unit 44. Otherwise, the text comparator 42 is adapted to activate an alert module 60. The document confirmation unit 44 is adapted on receipt of the activation signal A to display a confirmation to an operator 46 of the identity document validation system 5, that the presented identity document 10 is validated. The alert unit 60 is adapted on activation to issue an alert to the operator 46 advising them that the presented identity document 10 is suspect.

*Identity Document Cross-Validation Method*

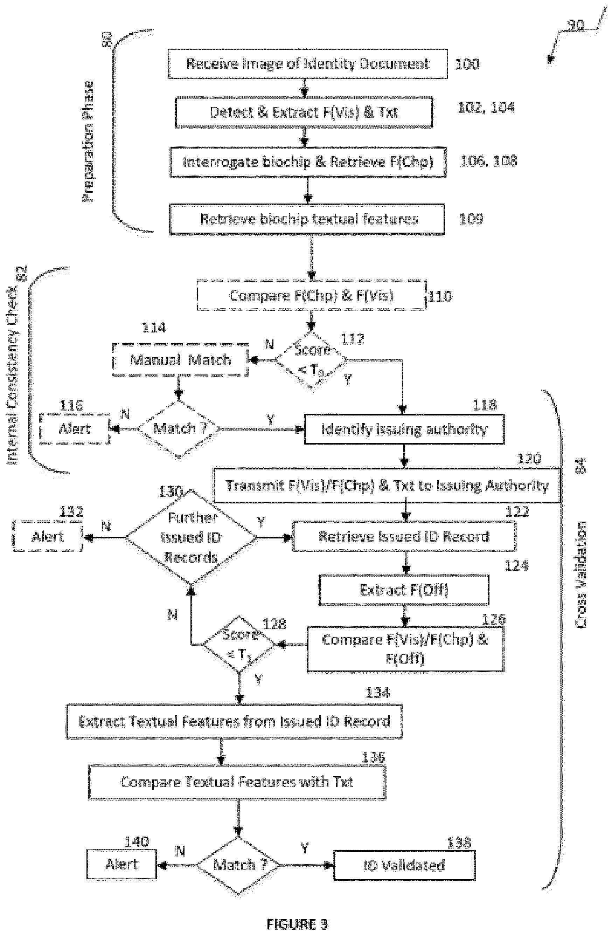

Referring to Figure 3, the identity document cross-validation method 90 comprises a preceding phase (not shown) comprising the step of allowing (not shown) an operator to establish a value for a threshold T for an acceptable degree of matching between images of faces. Referring to Figure 1, the skilled person will understand that the values of the thresholds in each face recognition block (FRB_0 and FRB_1) may or may not be the same as each other. Thus, the step allowing (not shown) an operator to establish a value for a threshold T for an acceptable degree of matching between images of faces may comprise the steps of

(a) allowing (not shown) a first operator to establish a value for a threshold To for an acceptable degree of matching between the Chip Face Image F(Chp) and the Visible Face Image F(Vis); and
(b) allowing (not shown) a second operator to establish a value for a threshold $T_1$ for an acceptable degree of matching between the Visible Face Image F(Vis) and the Office Face Image F(Off).

Returning to Figure 3, following the preceding phase, the method comprises a preparatory phase 80 which comprises a first step of receiving 100 a captured image of a presented identity document. Optionally, the method may also comprise a preceding step of capturing (not shown) the image of the identity document. The method comprises a next step of detecting and extracting 102 the Visible Face Image F(Vis) from the captured image of the identity document. Thereafter, the method comprises a next step of applying (not shown) optical character recognition (OCR) to the captured image of the identity document and extracting 104 ID Document Text (Txt) therefrom including but not limited to (a) personal detail elements of the identity document holder; (b) the registration number of the identity document number; and (c) the identity of the issuing authority of the identity document.
if the identity document is an e-ID, the method may also optionally comprise the next steps of

interrogating 106 a biochip in the identity document;

retrieving 108 from the biochip the Chip Face Image F(Chp) of the identity document holder; and
retrieving 109 from the biochip the biochip textual features.

Thereafter, the method comprises an optional internal consistency testing phase 82 wherein the consistency of the data contained within the presented identity document is checked by comparing the data visibly displayed in an identity document against the data contained in the biochip (if present) in the identity document. The internal consistency testing phase 82 comprises a first step of comparing 110 the Chip Face Image F(Chp) and the Visible Face Image F(Vis) by processing (not shown) the Chip Face Image F(Chp) and the Visible Face Image F(Vis) with a plurality of face recognition algorithms (as discussed in the description of the identity document cross validation system) to calculate (not shown) an accumulated score (as discussed in the description of the identity document cross validation system) representing the degree of matching of the Chip Face Image F(Chp) and the Visible Face Image F(Vis). The method comprises the next step of comparing 112 the accumulated score with the predefined value of the threshold $T_0$.

If the accumulated score is less than the threshold value $T_0$, the identity document is deemed to be suspect. However, the failure of the automated method to match the Chip Face Image F(Chp) and the Visible Face Image F(Vis) may be the result of a variety of factors external to the depicted faces themselves e.g. chocolate on the ID document, wear and tear etc, which would alter the Visible Face Image F(Vis). Thus, in the interests of improving the robustness of the cross-validation test, the method comprises the further step of submitting 114 the Chip Face Image F(Chp) and the Visible Face Image F(Vis) for manual checking by the operator. To this end, the method comprises the steps of displaying (not shown) the Chip Face Image F(Chp) and the Visible Face Image F(Vis) side by side to the operator and allowing (not shown) the operator to provide a determination as to whether the Chip Face Image F(Chp) and the Visible Face Image F(Vis) match. In the event the operator provides a determination that the Chip Face Image F(Chp) and the Visible Face Image F(Vis) do not match, the method comprises the further step of the step of notifying (not shown) the operator that the presented ID document is suspect and allowing 116 the operator to formulate a response in accordance with the operator's internal fraud policy.

If the accumulated score exceeds the threshold value To or the operator provides a determination that the Chip Face Image F(Chp) and the Visible Face Image F(Vis) match, the method proceeds to a cross-validation phase 84. The person skilled in the art will understand that in the event the presented identity document does not contain a biochip (i.e. presented identity document is not an e-ID) then this optional internal consistency testing phase 82 cannot be performed, in which case the method will proceed directly from the preparatory phase 80 to the cross-validation phase 84.

The cross-validation phase 88 comprises the first step of identifying 118 the issuing authority of the presented identity document from the ID Document Text (Txt). Thereafter, the method comprises the step of transmitting 120 to the issuing authority the Visible Face Image F(Vis) and the ID Document Text (Txt) from the presented identity document. The cross-validation phase 88 comprises a next step of retrieving 122 from the issuing authority's Issued ID Records Store an Issued ID Record. Thereafter, the cross-validation phase 88 comprises the next steps of

> extracting 124 from the retrieved Issued ID Record the Office Face Image F(Off);
> comparing 126 the Visible Face Image F(Vis) and the Office Face Image F(Off) by processing (not shown) the Visible Face Image F(Vis) and the Office Face Image F(Off) with a plurality of face recognition algorithms (as discussed in the description of the identity document cross validation system) to calculate (not shown) an accumulated score (as discussed in the description of the identity document cross validation system) representing the degree of matching of the Visible Face Image F(Vis) and the Office Face Image F(Off); and
> comparing 128 the accumulated score with the predefined value of the threshold $T_1$.
> If the accumulated score is less than the threshold value $T_1$, the method comprises the steps of
> retrieving 122 from the issuing authority's Issued ID Records Store a further Issued ID Record;
> extracting 124 from the retrieved Issued ID Record the Office Face Image F(Off) and an index number to identify the retrieved Issued ID Record; and
> comparing 126 the Visible Face Image F(Vis) and the Office Face Image F(Off) by processing (not shown) the Visible Face Image F(Vis) and the Office Face Image F(Off) with the face recognition algorithms to calculate the accumulated score; and
> comparing 128 the accumulated score with the predefined value of the threshold $T_1$

These steps are repeated until either of

> (a) the accumulated score exceeds the threshold value $T_1$; or
> (b) there are no further Issued ID Records 130 to retrieve from the issuing authority's Issued ID Records Store.

In the event the accumulated score from the comparison of the Visible Face Image F(Vis) and the Office Face Image F(Off) from each retrieved Issued ID Record in the issuing authority's Issued ID Records Store, fails to reach the threshold value $T_1$, the method comprises the further step of notifying (not shown) the operator that the presented ID document is suspect; and allowing 132 the operator to formulate a response in accordance with the operator's internal fraud policy.

If the accumulated score from the comparison of the Visible Face Image F(Vis) and the Office Face Image F(Off) from an Issued ID Record in the Issued ID Record exceeds the threshold value $T_1$, the method comprises the steps of

> extracting 134 the textual features of the Issued ID Record
> comparing 136 the textual features of the Issued ID Record with the ID Document Text (Txt) from the presented ID document.

If a match is found between the ID Document Text (Txt) and at least some of the extracted textual features from the Issued ID Record, the method comprises the step of issuing 138 a confirmation to the operator that the presented ID document is deemed validated. Otherwise, the method comprises the step of notifying (not shown) the operator that the presented ID document is suspect; and allowing 140 the operator to formulate a response in accordance with the operator's internal fraud policy.

In further embodiments the cross-validation phase 84 may be performed with the Chip Face Image F(Chp) instead of the Visible Face Image F(Vis). Similarly, the cross-validation phase 84 may be performed with the biochip textual features from the biochip (if present) in the presented identity document instead of the ID Document Text (Txt).

Modifications and alterations may be made to the above invention without departing from the scope of the invention.

**Claims**

1. A method of validating an identity document from a plurality of features extracted therefrom, wherein the features comprise a facial image and one or more personal detail elements of the identity document holder; and an identifier of an issuing authority who issued the identity document, wherein the method comprises the steps of

> allowing an operator to define a value of a threshold for assessing the similarity of a pair of facial images;
> receiving (100) an image of the identity document;
> processing (102, 104, 118) the image of the identity document to extract therefrom the identifier of the issuing authority of the identity document, one or more personal detail elements of the identity document holder and a first facial image comprising a facial image of the identity document holder

transmitting (120) to the issuing authority the first facial image and one or more of the personal detail elements of the identity document holder; performing a facial image comparison process comprising the steps of

allowing the issuing authority to retrieve (122) a record of an identity document issued by the issuing authority and to extract (124) from the retrieved record a second facial image comprising a facial image of the identity document holder of the identity document

calculating (126) a measure of the similarity between the first facial image and the second facial image

repeating (130) the steps of the facial image comparison process in the event the measure of the similarity is less than the value of the threshold, until no further records of identity documents issued by the issuing authority are available for retrieval

allowing the issuing authority to extract (134) one or more textual features from the retrieved record in the event the measure of the similarity exceeds the value of the threshold

allowing the issuing authority to compare (136) the textual features extracted from the retrieved record with the personal detail elements extracted from the image of the identity document;

deeming the identity document validated (138) in the event the personal detail elements extracted from the image of the identity document match at least some of the textual features extracted from the retrieved record

**characterised in that** the step of calculating (126) a measure of the similarity between the first facial image and the second facial image comprises the step of applying a plurality of face recognition algorithms to the first facial image and the second facial image and calculating an accumulated score therefrom representing the degree of matching between the faces of the persons displayed in each facial image.

2.  The method as claimed in Claim 1 wherein the step of allowing an operator to define a value of a threshold for assessing the similarity of a pair of facial images comprises the step of allowing the operator to define the value of the threshold to represent a substantially exact matching between the members of a pair of facial images;

the step of processing (102, 104, 118) the image of the identity document to extract therefrom the identifier of the issuing authority of the identity document, one or more personal detail elements of the identity document holder and a first facial image comprising a facial image of the identity document holder comprises the steps of interrogating (106) a biochip in the identity document; retrieving (108) from the biochip a third facial image comprising a facial image of the identity document holder; and retrieving (109) from the biochip one or more textual features;

the step of transmitting (120) to the issuing authority the first facial image and one or more of the personal detail elements of the identity document holder comprises the step of transmitting to the issuing authority the third facial image and the or each textual feature extracted from the biochip;

the step of calculating (126) a measure of the similarity between the first facial image and the second facial image comprises the step of calculating a measure of the similarity between the third facial image and the second facial image;

the step of allowing the issuing authority to compare (136) the textual features extracted from the retrieved record with the personal detail elements extracted from the image of the identity document comprises the step of allowing the issuing authority to compare the textual features extracted from the retrieved record with the or each textual feature extracted from the biochip; and

the step of deeming the identity document validated (138) in the event the personal detail elements extracted from the image of the identity document match at least some of the textual features extracted from the retrieved record comprises the step of

deeming the identity document validated in the event the or each textual feature extracted from the biochip match at least some of the textual features extracted from the retrieved record.

3.  The method of Claim 1 or Claim 2 wherein the steps of processing (102, 104, 118) the image of the identity document to extract therefrom the identifier of the issuing authority of the identity document, one or more personal detail elements of the identity document holder and a first facial image comprising a facial image of the identity document holder is followed by the steps of

interrogating (106) a biochip in the identity document;

retrieving (108) from the biochip a third facial image comprising a facial image of the identity document holder; and

retrieving (109) from the biochip one or more textual features; and

the step of transmitting (120) to the issuing authority the first facial image and one or more of the personal detail elements of the identity document holder is preceded by the steps of calculating (110) a measure of the similarity between the first facial image and the third facial image; and

issuing an alert (116) to the operator in the event the measure of similarity is less than the value of the threshold.

4. The method of Claim 1 wherein the step of applying a plurality of face recognition algorithms to the first facial image and the second image and calculating an accumulated score therefrom representing the degree of matching between the faces of the persons displayed in each image comprises the steps of

applying the face recognition algorithms to each of the first facial image and the second facial image to generate a plurality of outputs of the face recognition algorithms;

applying differential weights to the outputs of the face recognition algorithms to create a plurality of weighted outputs of the face recognition algorithms;

normalising the weighted outputs of the face recognition algorithms to create a plurality of normalised weighted outputs; and

calculating the sum of the normalised weighted outputs to generate the accumulated score.

5. An identity document validation system (5) adapted to validate an identity document from a plurality of features extracted therefrom, wherein the features comprise a facial image and one or more personal detail elements of the identity document holder; wherein the identity document validation system (5) comprises

an identity document processing unit (12) adapted in use to receive a captured image of the identity document and extract therefrom one or more personal detail elements of the identity document holder and a first facial image comprising a facial image of the identity document holder;

a cross validation unit (14) coupled with the identity document processing unit (12) to receive the first facial image and the or each personal detail elements of the identity document holder; and is further couplable in use with a repository 48 of records of identity documents issued by the issuing authority of the identity document; wherein each record comprises one or more facial images of the identity document holder of one such identity document and one or more textual features of that identity document; and wherein the cross validation unit (14) is adapted in use to retrieve records from the repository 48 and communicate each record to a face recognition engine block FRB_1 which is adapted in use to calculate a measure of similarity between the first facial image and the or each facial image in the record and identify therefrom a second facial image that most closely matches the first facial image

and a textual record analyser (30) coupled with the cross validation unit (14) and adapted in use to compare the textual features of the identity document with those of a matching record that comprises the second facial image;

and wherein the identity document validation system (5) is adapted in use to deem the identity document validated in the event the measure of similarity between the first facial image and the second facial image exceeds the value of the threshold and the or each of the textual features of the relevant record match the or each of the personal detail elements of the identity document holder

**characterised in that** the face recognition engine block FRB_1, comprises a plurality of face recognition engines $E_1$, $E_2$... $E_n$ adapted in use to be applied to a pair of facial images and calculate an accumulated score therefrom representing the measure of similarity between the faces of the persons displayed in each image.

6. The system of Claim 5 wherein the identity document processing unit 12 further comprises a

an biochip interrogation unit interface coupled with an internal consistency checking unit (16), wherein the biochip interrogation unit interface is adapted in use permit the transmission to the internal consistency checking unit (16), of a third facial image of the identity document holder retrieved from a biochip if present in the identity document, and

wherein the internal consistency checking unit (16) comprises a plurality of face recognition engines $E_1$, $E_2$... $E_n$, adapted in use to be applied to first facial image and the third facial image and calculate an accumulated score representing the degree of matching between the faces of the persons displayed in each facial image; and wherein the internal consistency checking unit 16 is further coupled with the cross validation unit (14) and is adapted in use to deactivate the cross validation unit (14) in the event the accumulated score is less than the threshold and issue an alert to an operator that the identity document is suspect.

7. The system of Claim 6 wherein the internal consistency checking unit (16) is coupled with an eyeball unit (36) adapted in use to display to an operator the faces of the persons displayed in the first facial image and the third facial image; and to allow the operator to provide a determination as to whether the faces match; wherein the eyeball unit (24) is coupled with the cross validation unit (14) and is adapted in use to deactivate the cross validation unit (14) in the event the operator provides the determination that the faces do not match.

8. The system of Claim 5 wherein the cross validation unit (14) is coupled with the internal consistency checking unit (16) to receive the third facial image and one or more personal detail elements of the identity document holder retrieved from the biochip in the identity document;

> wherein the face recognition engine block FRB_1 is adapted in use to calculate a measure of matching between the third facial image and the or each facial image in the record; and wherein the textual record analyser (30) is adapted in use to compare the or each personal detail elements of the identity document holder retrieved from the biochip with those of the record whose facial image which most closely matches that of the third facial image;
> wherein the identity document validation system (5) is adapted in use to deem the identity document validated in the event the third facial image and the most closely matching facial image from the repository (48) are substantially matching and the or each of the textual features of the relevant record match the or each of the personal detail elements of the identity document holder retrieved from the biochip; and
> wherein the accumulated score calculated by the plurality of face recognition engines $E_1, E_2...$ $E_n$ in the face recognition engine block FRB_1, represents the measure of matching between the faces of the persons displayed in each image.

9. The system of Claim 5 wherein the face recognition blocks FRB_0 and FRB_1, each comprise a plurality of face recognition engines $E_1, E_2... E_n$, adapted in use to be applied to each image in the pairs into which the first facial image, second facial image and third facial image are organised; and a plurality of weighting units coupled to the face recognition engines $E_1, E_2... E_n$ to apply differential weights to the outputs therefrom; wherein the weighting units are coupled with a summing unit to adapted in use to normalise the weighted outputs from the face recognition engines $E_1, E_2... E_n$ and to calculate a sum thereof to generate the accumulated score.

10. An identity document validation computer program, tangibly embodied on a computer readable medium, the computer program product including instructions for causing a computer to execute the identity document validation method as claimed in Claim 1.

FIGURE 1

FIGURE 2

**FIGURE 3**

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2015/341370 A1 (KHAN SAL [CA])<br>26 November 2015 (2015-11-26)<br>* paragraph [0014] *<br>* paragraph [0046] - paragraph [0047] *<br>* paragraph [0054] - paragraph [0059] *<br>* paragraph [0081] *<br>* paragraph [0112] *<br>* paragraph [0146] - paragraph [0150] *<br>* paragraph [0158] - paragraph [0159] *<br>* paragraph [0239] *<br>* paragraph [0265] *<br>* figures 2, 6, 8 * | 1,3-5,<br>7-10<br>2,6 | INV.<br>G06K9/00<br>G06K9/62 |
| A | EP 2 996 063 A1 (IDSCAN BIOMETRICS LTD [GB]) 16 March 2016 (2016-03-16)<br>* paragraph [0007] * | 1-10 | |
| Y | GB 2 548 774 A (PAYCASSO VERIFY LTD [GB])<br>27 September 2017 (2017-09-27)<br>* page 20, line 23 - line 28 * | 2,6 | |
| A | EP 2 930 640 A1 (IDSCAN BIOMETRICS LTD [GB]) 14 October 2015 (2015-10-14)<br>* the whole document * | 1-10 | TECHNICAL FIELDS SEARCHED (IPC)<br><br>G06K |

The present search report has been drawn up for all claims

| Place of search | Date of completion of the search | Examiner |
|---|---|---|
| The Hague | 21 November 2019 | De Coi, Juri |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

 

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 19 18 8912

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2019

| Patent document cited in search report | Publication date | Patent family member(s) | Publication date |
|---|---|---|---|
| US 2015341370 A1 | 26-11-2015 | CA 2883010 A1<br>US 2015341370 A1 | 25-08-2015<br>26-11-2015 |
| EP 2996063 A1 | 16-03-2016 | NONE | |
| GB 2548774 A | 27-09-2017 | NONE | |
| EP 2930640 A1 | 14-10-2015 | EP 2930640 A1<br>US 2015294139 A1 | 14-10-2015<br>15-10-2015 |

EPO FORM P0459

For more details about this annex : see Official Journal of the European Patent Office, No. 12/82

**EP 3 772 014 A1**

## REFERENCES CITED IN THE DESCRIPTION

**Patent documents cited in the description**

- US 8322605 B
- US 7110573 B